# EUROPEAN PATENT APPLICATION

(11) **EP 4 738 553 A1**
(43) Date of publication of application: **06.05.2026**
(21) Application number: 23943387.3
(22) Date of filing: 07.12.2023
(51) Int. Cl.: H01M 50/15, H01M 50/176, H01M 10/653

(54) **COVER PLATE ASSEMBLY AND BATTERY COMPRISING SAME**

(30) Priority: 30.06.2023 CN 202321707507 U
(71) Applicant: AESC Jiangsu Co., Ltd., Wuxi, Jiangsu 214443 (CN); AESC HUBEI CO., LTD., Shiyan, Hubei 442002 (CN); AESC ORDOS CO., LTD., Inner Mongolia 017200 (CN); AESC Hebei Co., Ltd., Cangzhou, Hebei 061758 (CN); AESC Shanghai Co., Ltd., Shanghai 201315 (CN)
(72) Inventor: CHEN, Hu, Wuxi, Jiangsu 214443 (CN)
(74) Representative: Becker, Eberhard
(86) International application number: PCT/CN2023/136951
(87) International publication number: WO 2025/000911

(57) **Abstract**

A cover plate assembly (100) and a battery comprising same. The cover plate assembly (100) comprises a cover plate body (1), an electrode lead-out member (2), an outer conductive member (3), and a heat dissipation material (4); the outer conductive member (3) is provided with a through connecting hole (3a); the electrode lead-out member (2) is provided with a connecting portion (2a); the electrode lead-out member (2) passes through the cover plate body (1) and is connected to the outer conductive member (3) at the connecting hole (3a) by means of the connecting portion (2a) of the electrode lead-out member (2); and the heat dissipation material (4) is disposed in the connecting hole (3a) and is in contact with the connecting portion (2a). The electrode lead-out member (2) and the outer conductive member (3) disposed on the cover plate body (1) are combined to form a whole, the heat dissipation material (4) is disposed at the joint of the electrode lead-out member and the outer conductive member, and the heat of the electrode lead-out member (2) and the outer conductive member (3) is simultaneously absorbed by means of the heat dissipation material (4). The heat dissipation material (4) is simultaneously in contact with the electrode lead-out member (2) and the outer conductive member (3), thereby indirectly increasing the contact area between the electrode lead-out member (2) and the outer conductive member (3), and avoiding too high local temperature rise.

## Description

### Technical Field

The present disclosure pertains to the field of batteries, and more specifically relates to a cover plate assembly and a battery including the same.

### Description of Related Art

Currently, in prismatic-housing batteries, an electrode assembly typically disposed on a cover plate body is electrically connected to a terminal post through an adapter. The electrode assembly is equipped with tabs, and the adapter includes a terminal post connection area and a tab connection area. The tab connection area is electrically connected to the tab, and the whole assembled unit is electrically connected to the terminal post through a terminal post connection area, thereby completing the electrode lead-out and assembly. In existing technologies, there is a method that does not use an adapter for the terminal post. Instead, a base plate is formed on a bottom surface of the terminal post, which extends through a cover plate through hole on the cover plate body and is electrically connected to an outer conductive member. The base plate is located on one side of the cover plate body close to the electrode assembly, and an insulating member is provided between the base plate and the cover plate body. The base plate is electrically connected to the tab led out from the electrode assembly.

In order to ensure a current-carrying area of a battery cell and control temperature rise, solid terminal posts are employed in the industry. Moreover, it is necessary to ensure that the terminal posts are of sufficient size and have a specific thickness. This practice significantly increases the weight and cost of the terminal posts. On this basis, to reduce the weight and cost of the terminal posts, locally thinning the terminal posts or eliminating connecting tabs or similar methods are commonly adopted. However, these weight reduction measures may result in a decrease in a current-carrying cross-sectional area of the battery cell, leading to an increase in temperature rise, which adversely affects the safety performance and reliability of the battery cell.

### SUMMARY

The technical problem addressed by this disclosure is to overcome the deficiencies of the related art by providing a cover plate assembly and a battery containing the same.

This disclosure addresses the aforementioned technical issues through the following technical solution:

A cover plate assembly includes a cover plate body, an electrode lead-out member, an outer conductive member, and a heat dissipation material. The outer conductive member is provided with a through connecting hole. The electrode lead-out member is provided with a connecting portion. The electrode lead-out member passes through the cover plate body and is connected to the outer conductive member at the connecting hole by means of the connecting portion of the electrode lead-out member. The heat dissipation material is disposed in the connecting hole and is in contact with the connecting portion.

The cover plate assembly is formed by a combination of the electrode lead-out member and the outer conductive member disposed on the cover plate body as a whole. The heat dissipation material is disposed at a joint of the electrode lead-out member and the outer conductive member, and the heat of the electrode lead-out member and the outer conductive member is simultaneously absorbed by means of the heat dissipation material. The heat dissipation material is simultaneously in contact with the electrode lead-out member and the outer conductive member, thereby indirectly increasing the contact area between the electrode lead-out member and the outer conductive member, and avoiding the rise of local temperature. Therefore, the structural configuration enables the cover plate assembly to achieve the objectives of material savings, weight reduction, and cost reduction while effectively controlling temperature rise and ensuring reliability in use.

Preferably, the heat dissipation material covers the connecting hole.

The heat dissipation material is configured to cover the entire connecting hole to enhance the heat dissipation effect.

Preferably, the cover plate assembly further includes a positioning member, which is disposed within the connecting hole and covers a surface of the heat dissipation material facing away from one side of the connecting portion.

By configuring the positioning member over the heat dissipation material, the purpose of securing the heat dissipation material is achieved, thereby ensuring that the heat dissipation material remains within the connecting hole.

Preferably, a surface of the positioning member facing away from one side of the heat dissipation material is equipped with a positioning portion, which is configured to be identified by a welding equipment.

By providing the positioning portion on the surface of the positioning member, it is possible to facilitate the identification and positioning by the welding equipment when welding an end surface of the outer conductive member, thereby enhancing the welding effect and meeting the requirements for high-precision welding.

Preferably, the described outer conductive member includes a second metal member and a first metal member, wherein the materials of the second metal member and the first metal member are different. The electrode lead-out member is connected to the connecting hole located on the second metal member through the connecting portion, with the second metal member being engaged with the first metal member.

By configuring the first metal member and the second metal member composed of two different materials, and integrating them in an engaged manner to form the outer conductive member, the difficulties of welding different metal materials are overcome.

Preferably, a plurality of insertion portions protruding toward the second metal member are provided on the first metal member. Matching portions are provided on the second metal member, each matching portion corresponding to and engaging with one of the insertion portions. The first metal member and the second metal member are engaged through the insertion portions and the matching portions.

By establishing the plurality of corresponding insertion portions and matching portions between the first metal member and the second metal member for fitted engagement, the reliability of the connection between the first metal member and the second metal member is enhanced, while also increasing a cross-sectional area for current carrying.

Preferably, in an axial direction of the connecting hole, the first metal member and the second metal member sequentially define the connecting hole. The heat dissipation material is disposed within the connecting hole and is in contact with the first metal member and the second metal member respectively.

In the scenario where the first metal member and the second metal member sequentially define the connecting hole, by ensuring that the heat dissipation material located within the connecting hole remains in contact with both the first metal member and the second metal member, it is possible to increase a contact area between the heat dissipation material and the outer conductive member. Simultaneously, this arrangement may also indirectly increase the contact area between the first metal member and the second metal member, thus further improving the heat dissipation of heat.

Preferably, a wall surface of the connecting hole is provided with a first recessed portion, wherein the heat dissipation material is disposed within the first recessed portion.

The first recessed portion is established on the wall surface of the connecting hole. By placing the heat dissipation material within the first recessed portion, a greater quantity of the heat dissipation material may be accommodated. Concurrently, this configuration increases a contact area between the heat dissipation material and the outer conductive member, thereby enhancing the heat dissipation effect.

Preferably, a surface of an area where the electrode lead-out member is located within the connecting hole is provided with a second recessed portion, wherein the heat dissipation material is disposed within the second recessed portion.

The second recessed portion is provided on the surface of the area where the electrode lead-out member is situated within the connecting hole. By placing the heat dissipation material within this second recessed portion, a greater quantity of the heat dissipation material may be accommodated. Concurrently, a contact area between the heat dissipation material and the electrode lead-out member is increased to enhance the heat dissipation effect.

Preferably, the electrode lead-out member is welded to the outer conductive member at the connecting hole.

The electrode lead-out member and the outer conductive member are welded together to enhance the firmness of their connection, while also increasing the cross-sectional area for current carrying.

Preferably, the heat dissipation material is a phase change material.

Compared to other materials, phase change materials may absorb relatively more heat, thereby enhancing the heat dissipation effect while reducing weight.

A battery includes:
The cover plate assembly as described above;
A housing, wherein the cover plate assembly covers an opening of the housing, and together with the housing, defines an accommodating chamber. The accommodating chamber is intended for accommodating a battery cell.

An advantageous effect of this disclosure lies in:
The cover plate assembly and the battery containing the cover plate assembly are designed such that the cover plate assembly is integrated by the mutual combination of the electrode lead-out member and the outer conductive member, both of which are affixed to the cover plate body. Moreover, at the junction of the electrode lead-out member and the outer conductive member, the heat dissipation material is provided. The heat dissipation material concurrently absorbs heat from both the electrode lead-out member and the outer conductive member. The heat dissipation material maintains simultaneous contact with the electrode lead-out member and the outer conductive member, thereby indirectly increasing the contact area between the electrode lead-out member and the outer conductive member, which prevents the rise of local temperature. Consequently, this structural design allows the cover plate assembly to effectively control temperature rises and ensure reliability of use, while achieving the objectives of reducing material consumption, weight, and cost.

### BRIEF DESCRIPTION OF THE DRAWINGS

FIG. 1 illustrates a schematic diagram of a structure of a cover plate assembly according to Embodiment 1 of the present disclosure.
FIG. 2 is a sectional view taken along line A-A of FIG. 1.
FIG. 3 is a detailed enlargement of a portion B from FIG. 2.
FIG. 4 is a structural diagram of an outer conductive member according to Embodiment 1 of the present disclosure.
FIG. 5 is an exploded structural diagram of an outer conductive member according to Embodiment 1 of the present disclosure.
FIG. 6 is a structural diagram of an outer conductive member in a first alternative embodiment of Embodiment 1 of the present disclosure.
FIG. 7 is an exploded structural diagram of an outer conductive member in a first alternative embodiment of Embodiment 1 of the present disclosure.
FIG. 8 is a structural diagram of a second metal member in a first alternative embodiment of Embodiment 1 of the present disclosure.
FIG. 9 is a structural diagram of an outer conductive member and an insulating member in a second alternative embodiment of Embodiment 1 of the present disclosure.
FIG. 10 is a structural diagram of an outer conductive member in a third alternative embodiment of Embodiment 1 of the present disclosure.
FIG. 11 is an exploded structural diagram of an outer conductive member in a third alternative embodiment of Embodiment 1 of the present disclosure.
FIG. 12 is a structural diagram of a cover plate assembly according to Embodiment 2 of the present disclosure.
FIG. 13 is a detailed enlargement of a portion D from FIG. 12.
FIG. 14 is a structural diagram of a cover plate assembly according to Embodiment 3 of the present disclosure.
FIG. 15 is a detailed enlargement of a portion E from FIG. 14.
FIG. 16 is an exploded structural diagram of a heat dissipation material and a positioning member within the cover plate assembly in Embodiment 3 of the present disclosure.

Description of Reference Numerals:
cover plate assembly 100
cover plate body 1
electrode lead-out member 2, connecting portion 2a
outer conductive member 3, connecting hole 3a, boundary 3b, first recessed portion 3c
first metal member 31, insertion portion 311, second metal member 32, matching portion 321
heat dissipation material 4
positioning member 5, positioning portion 51
insulating member 6, rotation-restricting portion 61

### DESCRIPTION OF THE EMBODIMENTS

The following presents a preferred embodiment and, in conjunction with the accompanying drawings, provides a clearer and more comprehensive explanation of the present disclosure.

### Embodiment 1

This embodiment provides a battery including a housing, a cover plate assembly, and a battery cell. The cover plate assembly covers an opening on the housing, thereby jointly defining an accommodating chamber with the housing. The accommodating chamber is configured for accommodating the battery cell. Specifically, the battery cell is equipped with electrodes, which are electrically connected to an electrode lead-out member within the cover plate assembly.

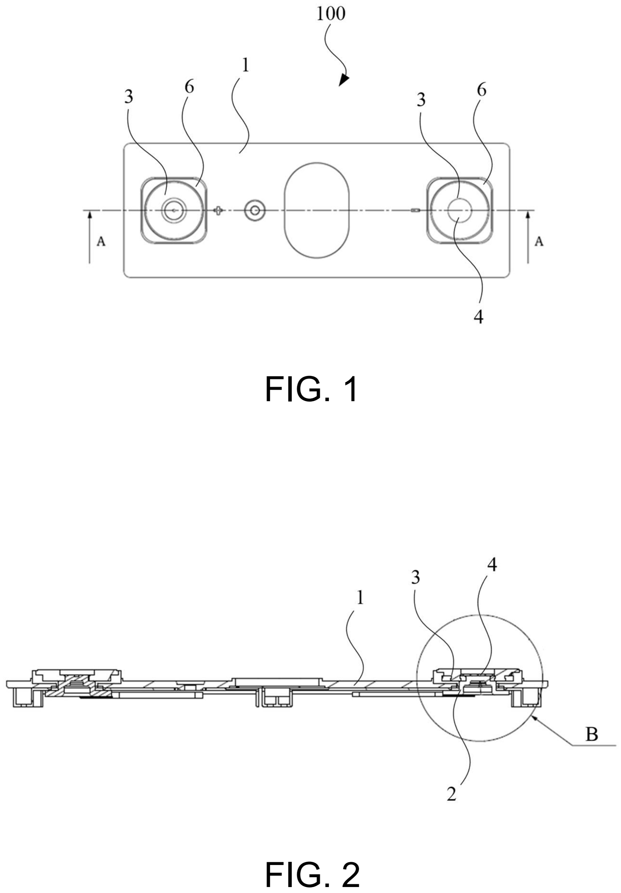

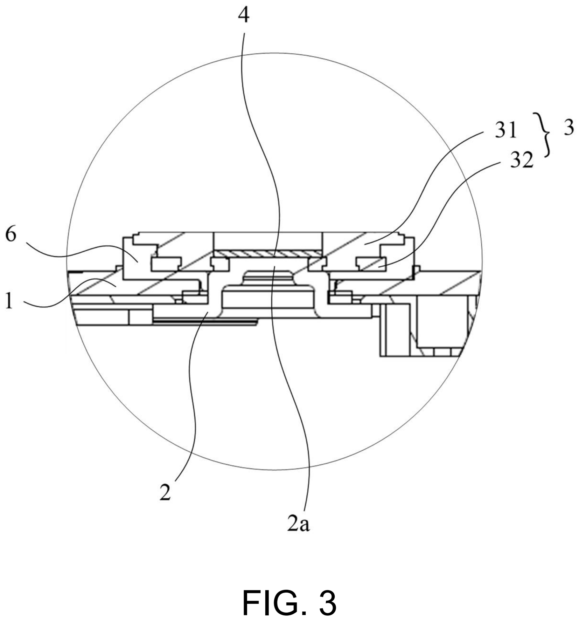

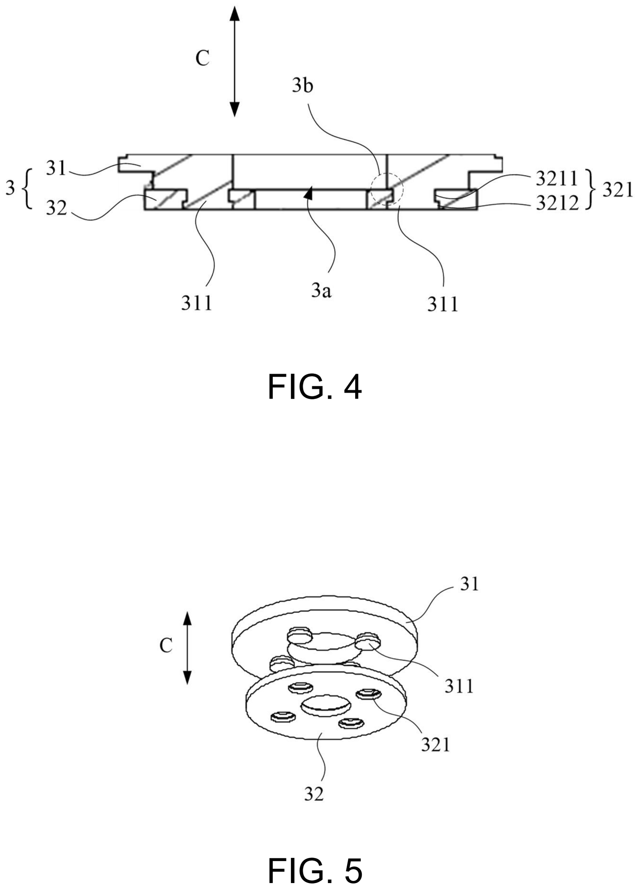

As specifically illustrated in FIG. 1 to FIG. 4, the cover plate assembly 100 in this embodiment includes a cover plate body 1, an electrode lead-out member 2, an outer conductive member 3, and a heat dissipation material 4. The outer conductive member 3 is provided with upper and lower through connecting holes 3a (refer to FIG. 4). The electrode lead-out member 2 is equipped with a connecting portion 2a and passes upward through the cover plate body 1. Subsequently, the connecting portion 2a of the electrode lead-out member 2 is connected with the outer conductive member 3 at the connecting hole 3a, thereby achieving electrical connection between the electrode lead-out member 2 and the outer conductive member 3. The heat dissipation material 4 is positioned within the connecting hole 3a, and a lower surface of the heat dissipation material 4 is in contact with the connecting portion 2a of the electrode lead-out member 2. Furthermore, to prevent any conductive situation between the cover plate body 1 and the electrode lead-out member 2 or the outer conductive member 3, as shown in FIG. 3, an insulating member 6 is arranged on an outer periphery of the electrode lead-out member 2 and the outer conductive member 3. The insulating member 6 serves to separate them from the cover plate body 1. In this embodiment, the insulating member 6 is formed through an injection molding process in a gap created after the electrode lead-out member 2 and the outer conductive member 3 are mounted on the cover plate body 1.

The cover plate assembly 100 is formed by a combination of the electrode lead-out member 2 and the outer conductive member 3 disposed on the cover plate body 1 as a whole. Furthermore, the heat dissipation material 4 is disposed at a joint of the electrode lead-out member 2 and the outer conductive member 3, and the heat of the electrode lead-out member 2 and the outer conductive member 3 is simultaneously absorbed by means of the heat dissipation material 4. The heat dissipation material 4 is simultaneously in contact with the electrode lead-out member 2 and the outer conductive member 3, thereby indirectly increasing the contact area between the electrode lead-out member 2 and the outer conductive member 3, and avoiding the rise of local temperature. Therefore, the structural configuration enables the cover plate assembly 100 to achieve the objectives of material savings, weight reduction, and cost reduction while effectively controlling temperature rise and ensuring reliability in use.

In this embodiment, the heat dissipation material 4 disposed at the joint of the electrode lead-out member 2 and the outer conductive member 3 is made of a phase change material. Compared to other materials, phase change materials may absorb relatively more heat, thereby enhancing the heat dissipation effect while reducing weight. Of course, in other embodiments, other types of the heat dissipation materials 4, aside from phase change materials, may also be used at the joint of the electrode lead-out member 2 and the outer conductive member 3. This allows the cover plate assembly 100 to effectively control temperature rise and ensure operational reliability while achieving the objectives of material savings, weight reduction, and cost efficiency. Furthermore, to prevent the heat dissipation material 4 from dislodging from the connecting hole 3a, the heat dissipation material 4 may be secured inside the connecting hole 3a through adhesion.

Specifically, in this embodiment, the detailed structure at the joint between the electrode lead-out member 2 and the outer conductive member 3 of the cover plate assembly 100 is depicted in FIG. 3. As shown in FIG. 3, the heat dissipation material 4 covers the entire connecting hole 3a. By increasing a coverage area of the heat dissipation material 4 within the connecting hole 3a, the heat dissipation effect is further enhanced. Additionally, as illustrated in FIG. 3, in this embodiment, the electrode lead-out member 2 and the outer conductive member 3 are connected at the connecting hole 3a through welding. The welded connection between the electrode lead-out member 2 and the outer conductive member 3 may improve the firmness of their connection, while also enhancing a cross-sectional area for current carrying. Furthermore, in the case of a welded connection between the electrode lead-out member 2 and the outer conductive member 3, weld marks may exist in an area of the connecting hole 3a, making it susceptible to oxidation and corrosion. At this point, by covering the entire connecting hole 3a with the heat dissipation material 4, it is possible to effectively seal the welded area, preventing occurrences of oxidation, corrosion, and similar issues in the welded area.

As illustrated in FIG. 3 and FIG. 4, in this embodiment, the outer conductive member 3 is not a single component but is composed of a combination of a first metal member 31 and a second metal member 32. The materials of the second metal member 32 and the first metal member 31 differ from each other. Specifically, the second metal member 32 and the first metal member 31 achieve reliable connection and conductivity through an engaging process. The electrode lead-out member 2 is connected to the connecting hole 3a located on the second metal member 32 through the connecting portion 2a, thereby establishing both a physical and electrical connection with the second metal member 32 of the outer conductive member 3. In this scheme, by configuring the first metal member 31 and the second metal member 32 with two different materials and combining them in an engaging manner to form the outer conductive member 3, the difficulties of welding different metal materials are overcome. Specifically, the material of the second metal member 32, which is connected to the electrode lead-out member 2, should be compatible with the material of the electrode lead-out member 2. Similarly, the material of the first metal member 31, which is connected to external leads, bus bars, etc., should be compatible with the material of the external leads and bus bars. This effectively resolves problems related to difficulties of welding different metal materials and the unreliability of post-weld connection strength.

As specifically illustrated in FIG. 4 and FIG. 5, in order to enhance the engaging connection strength between the first metal member 31 and the second metal member 32, a lower surface of the first metal member 31 is provided with four insertion portions 311 extended downward. These four insertion portions 311 are securely positioned within four matching portions 321 of the second metal member 32 through the engaging method, thereby achieving a reliable connection between the first metal member 31 and the second metal member 32. To further enhance the reliability of the connection between the first metal member 31 and the second metal member 32, welding at the joint interface on the basis of the engaging connection may be employed to increase the firmness of the connection, while also enhancing the cross-sectional area for current carrying. Moreover, compared to other fitting connection processes, this engaging riveting technique has a simpler structure and lower processing costs, which may further reduce the manufacturing cost of the outer conductive member 3.

Furthermore, as illustrated in FIG. 5, in this embodiment, the matching portion 321 extends entirely through the second metal member 32, specifically penetrating the second metal member 32 along a downward extending direction (i.e., an axial direction C of the connecting hole 3a) of the insertion portion 311, allowing the insertion portion 311 to protrude from a lower surface of the second metal member 32. This structural arrangement enhances the reliability of the formed matching structure. Based on this arrangement, it may be observed from FIG. 5 that in the downward extending direction of the insertion portion 311, the cross-sectional shape of the matching portion 321 varies, and a peripheral surface of the insertion portion 311 aligns with a wall shape of the matching portion 321, thereby further enhancing a connection strength when the matching portion 321 is engaged with the insertion portion 311. Specifically, each matching portion 321 consists of two through holes of different diameters, namely a first through hole 3211 and a second through hole 3212, with a projection of the first through hole 3211 located within a projection range of the second through hole 3212. This configuration forms a step difference on the wall of the stepped through hole, allowing the insertion portion 311 to embed within, thereby increasing the connection firmness during the riveting of the insertion portion 311 and the matching portion 321. As a result, it becomes difficult for the first metal member 31 to detach from the second metal member 32 even under external forces. Specifically, the second through hole 3212 located at the lowermost end of the matching portion 321 is designed as a uniform cross-section recessed platform. Compared to other recessed platform shapes, this configuration provides a higher tensile strength and better connection effectiveness when engaged with the insertion portion 311.

Certainly, under other feasible implementations, the insertion portion 311 and the matching portion 321 may also adopt alternative structures to achieve a riveted joint, thereby enhancing the reliable connection between the first metal member 31 and the second metal member 32. Three other feasible implementation schemes are provided herein:

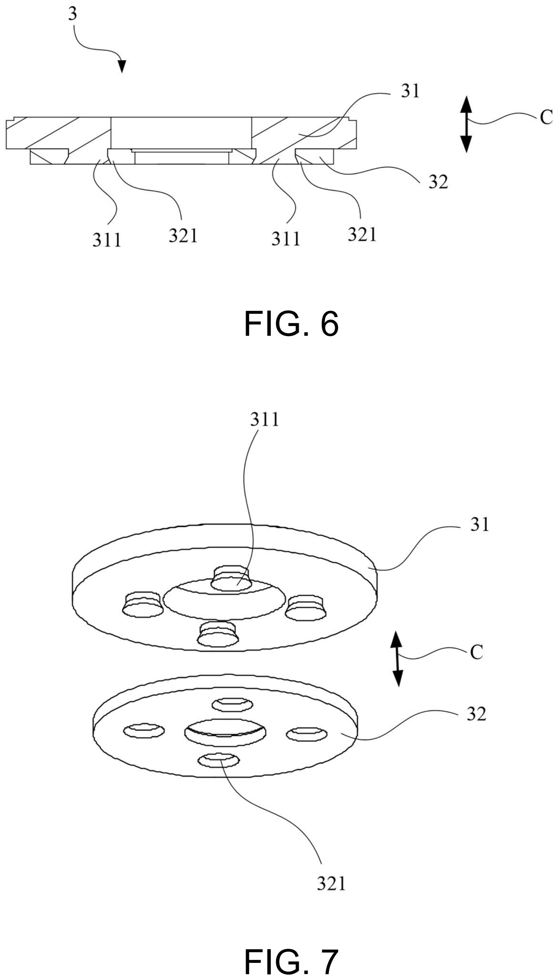

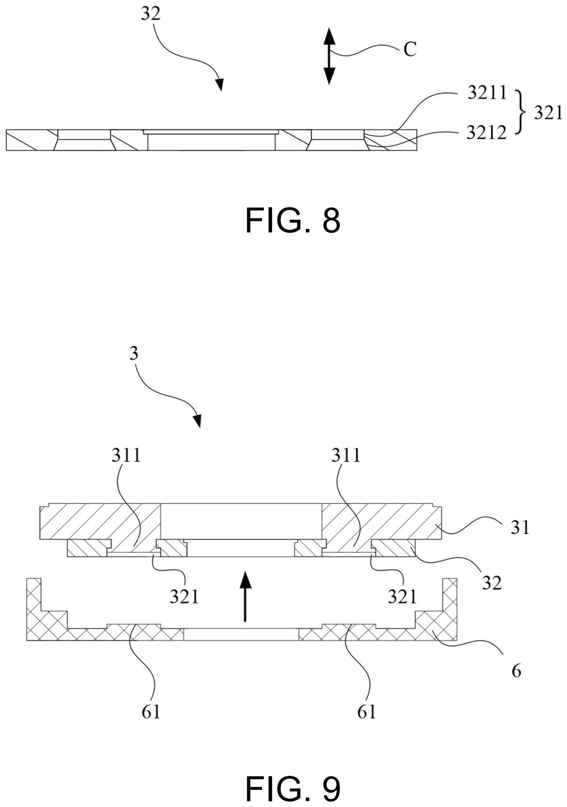

First alternative embodiment: As depicted in FIG. 6, FIG. 7, and FIG. 8, the configuration includes the matching portion 321 on the second metal member 32, which is similarly a through hole extending vertically and horizontally. This through hole is also a stepped through hole composed of the first through hole 3211 and the second through hole 3212. The primary distinction lies in the fact that the second through hole 3212, located at the lowest end of the matching portion 321, is a variable cross-section through hole (refer specifically to FIG. 8). In the downward extending direction (i.e., the axial direction C of the connecting hole 3a) along the insertion portion 311, the variable cross-section recessed platform exhibits a flared shape, with its cross-sectional shape gradually transitioning from smaller to larger. This structural configuration facilitates the material at a terminal end of the insertion portion 311 to better fill the flared end of the matching portion 321 when processes involving material deformation, such as riveting or stamping, are employed to achieve the matching connection between the insertion portion 311 and the matching portion 321, thereby enhancing the riveting effect between the first metal member 31 and the second metal member 32.

Second alternative embodiment: As depicted in FIG. 9, the configuration includes the matching portion 321 on the second metal member 32, which is similarly a through hole extending vertically and horizontally. The insertion portion 311 on the first metal member 31 does not completely protrude from the matching portion 321, resulting in a recess on the lower surface of the second metal layer 32. Consequently, a surface of the insulating member 6, which faces one side of the second metal member 32, is equipped with a corresponding rotation-restricting portion 61. The rotation-restricting portion 61 extends into the matching portion 321 of the second metal member 32, thereby enhancing the connection and positioning effectiveness between the insulating member 6 and the second metal member 32. The configuration serves to more effectively prevent the outer conductive member 3 from rotating relative to the insulating member 6.

Certainly, in other embodiments, the rotation-restricting portion 61 located within the insulating member 6 may also be configured as a recessed structure. In this configuration, the insertion portion 311 on the first metal member 31 may extend beyond the surface of the second metal member 32. By means of the cooperation between the insertion portion 311 and the rotation-restricting portion 41, the objective of preventing the outer conductive member 3 from rotating relative to the insulating member 6 is achieved.

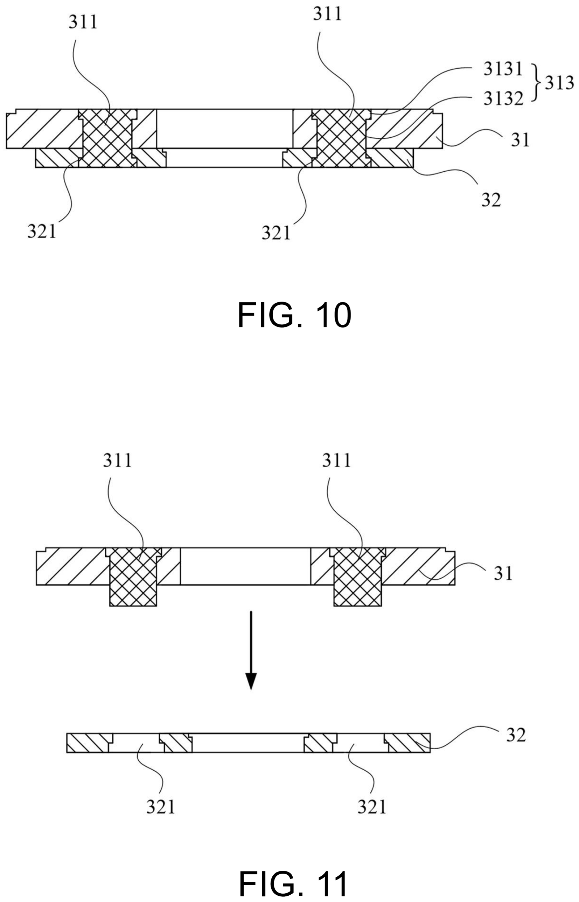

Third alternative embodiment: As illustrated in FIG. 10 and FIG. 11, the first metal member 31 and the insertion portion 311 are not integrally formed but are connected in a relatively assembled manner. Specifically, as shown in FIG. 10, the first metal member 31 is provided with a vertically penetrating mounting portion 313, which accommodates the insertion portion 311. The mounting portion 313 is specifically a stepped through hole composed of a third through hole 3131 and a fourth through hole 3132. The fourth through hole 3132 penetrates through the first through hole 3131, and in the downward extending direction of the insertion portion 311, a projection of the fourth through hole 3132 is located within a projection range of the third through hole 3131. This configuration allows the insertion portion 311 to be mounted downwardly into the mounting portion 313, thereby restricting further downward movement of the insertion portion 311 through the mounting portion 313, preventing the insertion portion 311 from continuing to move downward.

Subsequently, as illustrated in FIG. 11, the first metal member 31 is mounted downwardly onto the second metal member 32, achieving fitted engagement through the insertion portion 311 and the matching portion 321 of the second metal member 32, thereby accomplishing the riveting and positioning of the two members. Consequently, the insertion portion 311 is similarly engaged and connected to the second metal member 32, thereby ensuring a reliable connection between the first metal member 31 and the second metal member 32 through the insertion portion 311 independent of the first metal member 31.

This structural configuration plan facilitates the assembly, disassembly, and replacement of the insertion portion 311. Furthermore, when replacing the insertion portion 311, there is no need to reprocess the first metal member 31, thereby enhancing structural versatility and maintainability.

In this embodiment, along the axial direction C of the connecting hole 3a, the first metal member 31 and the second metal member 32 sequentially define the connecting hole 3a, and the heat dissipation material 4 is disposed within the connecting hole 3a, making contact with both the first metal member 31 and the second metal member 32. Specifically, as illustrated in FIG. 4, in this embodiment, diameters of the first metal member 31 and the second metal member 32 at the location where they form the connecting hole 3a are different. This configuration allows the heat dissipation material 4, when positioned within the connecting hole 3a, to cover a boundary 3b between the first metal member 31 and the second metal member 32. Consequently, it is possible to achieve the objective of sealing the boundary 3b between the first metal member 31 and the second metal member 32, which are composed of different materials.

### Embodiment 2

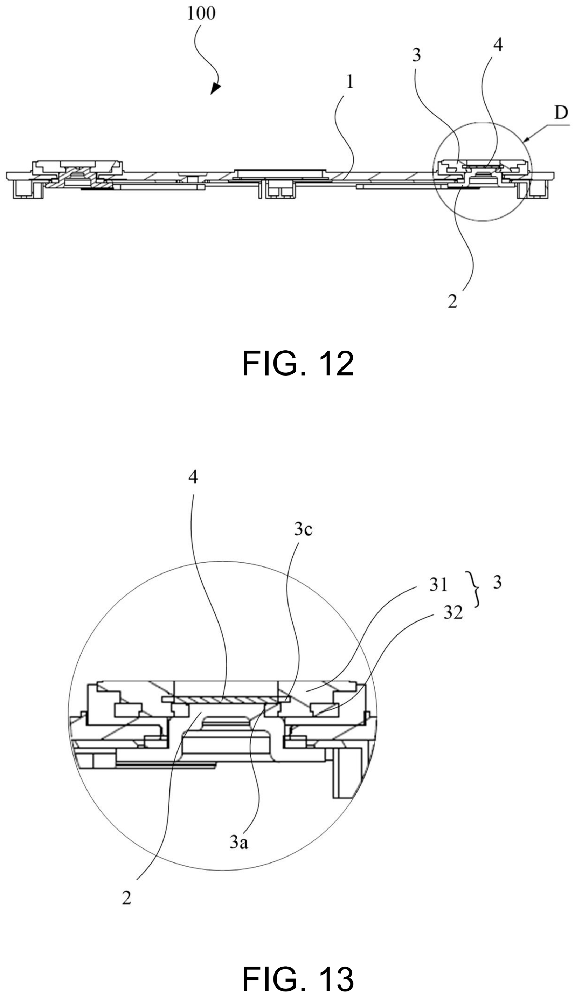

This embodiment further provides a cover plate assembly 100, which is substantially similar in structure to the cover plate assembly 100 provided in Embodiment 1, with the difference being as follows: In this embodiment, as shown in FIG. 12 and FIG. 13, a first recessed portion 3c is provided on a wall surface of a contact bore of the outer conductive member 3. The heat dissipation material 4 is also disposed within the first recessed portion 3c. By arranging the heat dissipation material 4 within the first recessed portion 3c, more heat dissipation material 4 may be accommodated. Additionally, such a structural arrangement may increase the contact area between the heat dissipation material 4 and the outer conductive member 3, thereby enhancing the heat dissipation effect.

As specifically illustrated in FIG. 13, in this embodiment, the outer conductive member 3 is also formed by the engagement of the first metal member 31 and the second metal member 32. The first recessed portion 3c is established on the wall surface of the contact bore corresponding to the first metal member 31.

Certainly, in other embodiments, it is also possible to provide a second recessed portion (not shown in the figure) that is recessed downwardly on a surface of an area where the electrode lead-out member 2 is located within the connecting hole 3a. This allows the lower surface of the heat dissipation material 4 to be positioned within the second recessed portion, thereby achieving the purpose of accommodating more heat dissipation material 4, as well as increasing the contact area between the heat dissipation material 4 and the electrode lead-out member 2, thereby enhancing the heat dissipation effect.

In a more prioritized scenario, the first recessed portion 3c may be formed on the outer conductive member 3, while the second recessed portion may be formed on the electrode lead-out member 2, in order to further increase the volume of the heat dissipation material 4 that may be accommodated, and to enhance the contact area between the electrode lead-out member 2 and the outer conductive member 3.

### Embodiment 3

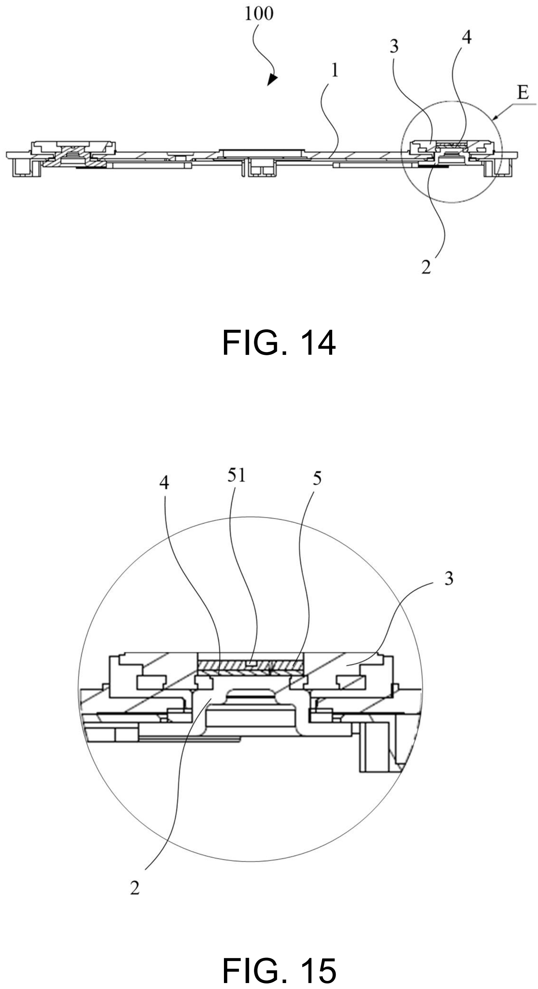

This embodiment further provides a cover plate assembly 100, which has a structure substantially similar to the cover plate assembly 100 provided in Embodiment 1, with the following difference: In this embodiment, as shown in FIG. 14 and FIG. 15, the cover plate assembly 100 further includes a positioning member 5. The positioning member 5 is further arranged within the connecting hole 3a formed at the center of the outer conductive member 3 and covers the surface of the heat dissipation material 4 facing away from one side of the connecting portion 2a. By setting the positioning member 5 to cover the heat dissipation material 4, the purpose of positioning the heat dissipation material 4 is achieved, ensuring that the heat dissipation material 4 remains located within the connecting hole 3a. Specifically, when the material of the positioning member 5 is metal, the positioning member 5 may be fixed within the connecting hole 3a by means of adhesion, or the positioning member 5 may be welded to the wall of the connecting hole 3a. However, when the material of the positioning member 5 is plastic, the positioning member 5 may be fixed within the connecting hole 3a by means of adhesion.

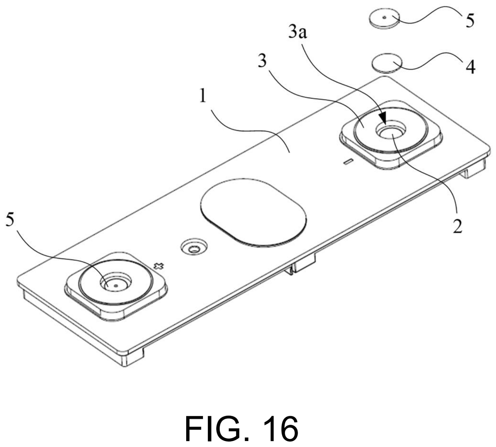

Furthermore, as illustrated in FIG. 15 and FIG. 16, a positioning portion 51 is arranged on a surface (i.e., on an upper surface of the positioning member 5) of the positioning member 5 facing away from one side of the heat dissipation material 4. The positioning portion 51 is designed for identification by the welding equipment. By providing the positioning portion 51 on the surface of the positioning member 5, it is possible to facilitate the identification and positioning by the welding equipment during the welding of the end surface of the outer conductive member 3, thereby enhancing the welding effect and meeting the demands for high-precision welding.

Specifically, in this embodiment, the positioning portion 51 is a recess formed on the surface of the positioning member 5, specifically a circular hole-shaped recess (refer to FIG. 15 for details), to fulfill the purpose of being identified and positioned by the automatic welding equipment, thereby facilitating the implementation of the welding process. To further reduce the difficulty of welding positioning, it is preferable that the positioning portion 51 is formed at the central position of the positioning member 5.

Certainly, in other embodiments, the positioning portion 51 may also employ a non-recessed structure to achieve identification by the automated welding equipment. For instance, the positioning portion 51 may be formed as a cylindrical protrusion or a square protrusion on the surface of the positioning member 5, among other configurations, the specifics of which are not elaborated upon herein.

While the above describes specific embodiments of the present disclosure, it should be understood by those skilled in the art that these are merely illustrative examples. The scope to be protected by the present disclosure is defined by the appended claims. Various changes or modifications may be made to these embodiments by those skilled in the art without departing from the principles and spirit of the present disclosure, and such changes and modifications shall fall within the scope to be protected by the present disclosure.

## Claims

1. A cover plate assembly, **characterized in** comprising a cover plate body, an electrode lead-out member, an outer conductive member, and a heat dissipation material, wherein the outer conductive member is provided with a through connecting hole, the electrode lead-out member is provided with a connecting portion, the electrode lead-out member passes through the cover plate body and is connected to the outer conductive member at the connecting hole by means of the connecting portion of the electrode lead-out member, the heat dissipation material is disposed in the connecting hole and is in contact with the connecting portion.

2. The cover plate assembly according to claim 1, **characterized in that** the heat dissipation material covers the connecting hole.

3. The cover plate assembly according to claim 2, **characterized in that** the cover plate assembly further comprises a positioning member, which is disposed within the connecting hole and covers a surface of the heat dissipation material facing away from one side of the connecting portion.

4. The cover plate assembly according to claim 3, **characterized in that** a surface of the positioning member facing away from one side of the heat dissipation material is equipped with a positioning portion, which is configured to be identified by a welding equipment.

5. The cover plate assembly according to claim 1, **characterized in that** the outer conductive member comprises a second metal member and a first metal member, wherein materials of the second metal member and the first metal member are different, the electrode lead-out member is connected to the connecting hole located on the second metal member through the connecting portion, with the second metal member being engaged with the first metal member.

6. The cover plate assembly according to claim 5, **characterized in that** a plurality of insertion portions protruding toward the second metal member are provided on the first metal member, matching portions are provided on the second metal member, each of the matching portions corresponding to and engaging with one of the insertion portions, the first metal member and the second metal member are engaged through the insertion portions and the matching portions.

7. The cover plate assembly according to claim 5, **characterized in that** in an axial direction of the connecting hole, the first metal member and the second metal member sequentially define the connecting hole, the heat dissipation material is disposed within the connecting hole and is in contact with the first metal member and the second metal member respectively.

8. The cover plate assembly according to any one of claims 1-7, **characterized in that** a wall surface of the connecting hole is provided with a first recessed portion, wherein the heat dissipation material is disposed within the first recessed portion.

9. The cover plate assembly according to any one of claims 1-7, **characterized in that** a surface of an area where the electrode lead-out member is located within the connecting hole is provided with a second recessed portion, wherein the heat dissipation material is disposed within the second recessed portion.

10. The cover plate assembly according to any one of claims 1-7, **characterized in that** the electrode lead-out member is welded to the outer conductive member at the connecting hole.

11. The cover plate assembly according to any one of claims 1-7, **characterized in that** the heat dissipation material is a phase change material.

12. A battery, **characterized in** comprising:
the cover plate assembly according to any one of claims 1-11;
a housing, wherein the cover plate assembly covers an opening of the housing, and together with the housing, defines an accommodating chamber, the accommodating chamber is configured for accommodating a battery cell.
